# EUROPEAN PATENT SPECIFICATION

(11) **EP 4 495 748 B1**
(45) Date of publication and mention of the grant of the patent: **18.11.2026**
(21) Application number: 23306265.2
(22) Date of filing: 21.07.2023
(51) Int. Cl.: G06F 3/04812, G06F 3/04815, G06F 3/04845, G06T 19/20

(54) **METHOD FOR CONSTRUCTION OF A DIGITAL REPRESENTATION OF A SPATIAL RELATIONSHIP BETWEEN OBJECTS IN A VIRTUAL SPACE**
VERFAHREN ZUR ERSTELLUNG EINER DIGITALEN DARSTELLUNG EINER RÄUMLICHEN BEZIEHUNG ZWISCHEN OBJEKTEN IN EINEM VIRTUELLEN RAUM
PROCÉDÉ DE CONSTRUCTION D'UNE REPRÉSENTATION NUMÉRIQUE D'UNE RELATION SPATIALE ENTRE DES OBJETS DANS UN ESPACE VIRTUEL

(43) Date of publication of application: 22.01.2025
(73) Proprietor: Dassault Systèmes, 78140 Vélizy-Villacoublay (FR)
(72) Inventor: DELFINO, Christophe, 06906 BIOT (FR)
(74) Representative: Plasseraud IP

(56) References cited:
- US-A1- 2005 062 738
- US-A1- 2015 026 618
- US-A1- 2016 334 971
- US-B1- 11 204 679

## Description

### FIELD OF THE INVENTION

The invention pertains to the field of computer aided design and other three dimensional computer generated environments. In particular, the invention relates to a computer implemented method of construction of a digital representation of a spatial relationship, that is to say the relationship defined by the relative spacing and orientation between a mobile object and a three dimensional object in a three dimensional space.

### BACKGROUND PRIOR ART

Over recent years, the ability of computer systems to generate representations of virtual environments which may be presented to a user in such a way that the user perceives the environment as a three-dimensional space in which entities are subject to some extent to rules of perspective, occlusion, and lighting so as to encourage the user to interact or interpret the presented environment to some degree as if it is a real physical space has grown. Such representations are valuable in a number of specialist technical fields such as the interpretation of three dimensional scans from x-ray or tomography sources, industrial applications such as Computer Aided Design (CAD), Computer Aided Machining (CAM) Computer Aided Engineering (CAE) etc, and entertainment fields such as cinema and computer gaming.

In many such environments it may be desired for a user to precisely manipulate artefacts such as three dimensional objects presented therein. In some cases, interaction operations inherited from two dimensional environments such a drag and drop, click to select, keyboard short cuts and the like may be translated to a three dimensional context, however the additional degrees of freedom available in such contexts may make these conventional mechanisms insufficient or unsatisfactory. In some cases, they cannot be replicated as such into a three dimensional environment.

In particular, although it may be permissible for entities in a spatial environment to adopt any position and/or alignment with respect to each other, in many cases, there may be particular spatial relationships that are more likely, more desirable, or more meaningful than others. A common interaction feature known from two dimensional environments as discussed above is the "snap to" feature, in which the movement of an entity with respect to user input from a mouse or the like may be influenced so as to bias that entity towards another entity. This may typically cause the entity to jump, ie to be automatically displaced, in the environment from its current position to align with the other entity, e.g, such that coordinates of at least a part of one entity in at least one axis of the three dimensional environment intersect, or come into a defined proximity to coordinates of at least a part of another entity. For example, the mouse pointer may preferentially align itself with a menu item, since this is a more likely and meaningful selection that an arbitrary location with no particular association. This mechanism is known correspondingly in three dimensional environments, whereby one entity may snap preferentially to a position in three dimensional space.

It is desired to improve this mechanism in three dimensional environments.

US 2016/334971 A1 discloses a method of snapping 3D objects in a 2D space together.

US 2015/026618 A1 is directed to a snapping method of two 3D objects wherein the envelope region that is used for determining if a user wants to snap one object to the other can be three dimensional.

US 11 204 679 B1 discloses a snapping method of two 3D objects wherein the envelope region that is used for determining if a user wants to snap one object to the other is defined as a 2D plane of a bounding box of the two 3D objects. The distance between the two planes of the bounding boxes is determined and the two 3D objects are snapped together when this distance is below a certain threshold. This threshold is defined before and cannot be adjusted by a parameter.

### SUMMARY OF THE INVENTION

In accordance with the present invention in a first aspect there is provided a computer implemented method of construction of a digital representation of a spatial relationship between a mobile object and a three dimensional object.

The method comprises the steps of: identifying a feature of the mobile object, identifying a feature of the three dimensional object, receiving user input defining a movement of the mobile object in the virtual space determining a rate of motion of the mobile object, defining an envelope region with respect to the three dimensional object in the virtual space, wherein at least one dimension of the envelope region is a function of the rate of motion, detecting that the feature of the mobile object intersects the envelope region, and responsive to detecting that the feature of the mobile object intersects the envelope region, shifting the mobile object to align the feature of the mobile object with the feature of the three dimensional object in the virtual space.

In a development of the first aspect, the feature of the mobile object comprises one of an axis passing through the barycentre of the mobile object, and aligned with a major axis thereof; an axis passing through the barycentre of the mobile object, and aligned with a cardinal axis of the virtual space; an edge of the mobile object; a surface of mobile object; a centre of a surface of mobile; and a point at an extremity of mobile object.

In a development of the first aspect, the feature of the three dimensional object comprises one of: an axis passing through the barycentre of the three dimensional object, and aligned with a major axis thereof; an axis passing through the barycentre of the three dimensional object, and aligned with a cardinal axis of the virtual space; an edge of the three dimensional object; a surface of three dimensional object; a centre of a surface of the three dimensional object; and a point at an extremity of the three dimensional object.

In a development of the first aspect, the step of aligning the feature of the mobile object with the three dimensional object in the virtual space comprises bringing the feature of the mobile object to intersect with the feature of the three dimensional object in the virtual space.

In a development of the first aspect, the step of aligning the feature of the mobile object with the three dimensional object in the virtual space comprises bringing the feature of the mobile object to align with the feature of the three dimensional object in the virtual space.

In a development of the first aspect, the method comprises a further step of determining a processing capacity of a platform implementing the method, wherein at the step of defining an envelope region around the three dimensional object, the at least one dimension of the envelope region is defined as proportional function of the rate of motion and of the processing capacity.

In a development of the first aspect, the method comprises a further step of determining whether a direction of the rate of motion of the mobile object follows the feature of the three dimensional object, and in a case where the direction of the rate of motion of the mobile object follows the feature of the three dimensional object, at the step of defining an envelope region around the three dimensional object, the at least one dimension of the envelope region is defined as a function of the rate of motion such that the degree to which the at least one dimension of the envelope region depends on the rate of motion is less where the direction of the rate of motion of the mobile object does not follow the feature of the three dimensional object.

In a development of the first aspect, the method comprises a further step of determining a dimension of the three-dimensional object, wherein at the step of defining an envelope region around the feature of the three dimensional object, the at least one dimension of the envelope region is defined as a function of the rate of motion and to the dimension of the three-dimensional object.

In accordance with the present invention in a second aspect, there is provided a data processing system comprising means for carrying out the method of the first aspect.

In accordance with the present invention in a third aspect, there is provided computer program comprising instructions which, when the program is executed by a computer, cause the computer to carry out the method of the first aspect.

In accordance with the present invention in a fourth aspect, there is provided a computer-readable medium comprising instructions which, when executed by a computer, cause the computer to carry out the method of the first aspect.

In accordance with the present invention in a fifth aspect, there is provided a non-transitory computer-readable data-storage medium containing computer-executable instructions to cause a computer system to carry out the method of the first aspect.

In accordance with the present invention in a sixth aspect, there is provided a computer system comprising a processor (CP) coupled to a memory, the memory storing computer-executable instructions to cause the computer system to carry out the method of the first aspect.

### BRIEF DESCRIPTION OF THE DRAWINGS

The invention will be better understood and its various features and advantages will emerge from the following description of a number of exemplary embodiments provided for illustration purposes only and its appended figures in which:
- Figure 1: presents a three dimensional environment with respect to which embodiments may be described;
- Figure 2: presents a number of possible features of exemplary objects in accordance with embodiments;
- Figure 3: presents a further three dimensional environment with respect to which embodiments may be described;
- Figure 4: presents a mechanism of realignment in accordance with embodiments;
- Figure 5: presents a mechanism of realignment in accordance with embodiments;
- Figure 6: presents a mechanism of realignment in accordance with embodiments;
- Figure 7: presents a mechanism of realignment in accordance with embodiments;
- Figure 8a: presents steps of a method in accordance with an embodiment;
- Figure 8b: presents a second example of modified behaviour in a snapped relationship in a first scenario;
- Figure 8c: presents a second example of modified behaviour in a snapped relationship in a second scenario;
- Figure 9a: presents a third example of modified behaviour in a snapped relationship;
- Figure 9b: presents a third example of modified behaviour in a snapped relationship in a first scenario;
- Figure 9c: presents a third example of modified behaviour in a snapped relationship in a second scenario;
- Figure 10a: presents a first scenario of a variable magnetic effect incorporating additional factors;
- Figure 10b: presents a second scenario of a variable magnetic effect incorporating additional factors;
- Figure 11: presents steps of a method in accordance with an embodiment; and
- Figure 12: presents a computer suitable for carrying out a method according to an embodiment.

### Detailed description

In computer generated three dimensional environments the representation of the environment from a given view point as presented to a user is substantially a two dimensional projection of the three dimensional environment onto a plane, which will often include a multitude of entities at various distances. This will often lead to a complex and cluttered representation, such that when a user uses a selection mechanism to select a particular entity, a small error in the manipulation may lead to the user inadvertently selecting some other entity, for example an entity far in the background, which is of no particular interest, but happened to fall more closely under the point selected by the user. As discussed above, partial solutions are known in the prior art whereby the selection focus may preferentially attach to certain features, but in a dense three dimensional environment such behaviour may even be detrimental, where the system insists on focusing on some spurious feature rather than the true object of the user's attention.

Embodiments described herein address this issue.

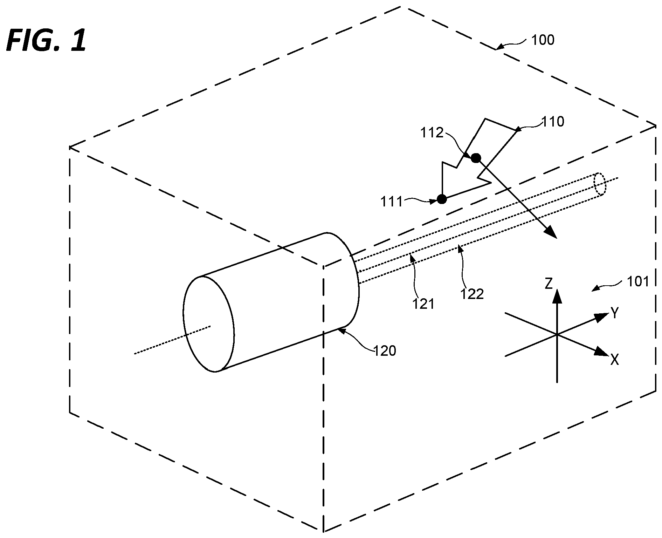

Figure 1 presents a three dimensional environment with respect to which embodiments may be described.

In particular, there is provided a computer implemented method of construction of a digital representation of a spatial relationship between a mobile object and a three dimensional object.

As shown in figure 1, a mobile object 110 and a three dimensional object 120 are each defined. As shown, the mobile object is a pointer, which may be defined as a two or three dimensional object in terms for example of a digital definition of one or more polygons or geometric solids in a virtual space 100, including a planar object having a defined position in the virtual space, or simply a point in the space associated with a graphical symbol, which may not necessarily scale or change appearance as a function of a user's point of view with respect to the space.

A three dimensional object 120 is defined as a three-dimensional object in terms of a digital definition of one or more polygons or geometric solids in a virtual space 100.

As shown, the virtual space 100 is relatively small with respect to the mobile object 110 and three dimensional object 120 for the sake of convenient graphical representation, however it will be recognized that in practice this virtual space may be of any size and/or shape, and furthermore of undefined size and or shape. The virtual space 100 may conveniently be described in terms of three axes X, Y and Z, as represented by the orthogonal set of axes 101.

As shown, the mobile object 110 is a pointer in the form of an arrow, and the three dimensional object 120 is a cylinder. It will be appreciated that these forms have been selected for the sake of simplicity, and that embodiments may encompass any form susceptible of representation in, or with respect to, the virtual space 100 as discussed above.

As shown, a particular feature 111 of the mobile object 110 is identified. Specifically, as shown, the selected feature 111 is the point of the arrow 110.

It will be appreciated that in embodiments, any feature may be selected. This selection may be determined by user input, and/or by default as a function of the type of object in question, either as regards the shape object, or any other characteristic thereof as may be defined in the three dimensional environment directly (size, orientation, spatial relationship to other objects, local density of objects, illumination, position in user field of view) and/or in metadata associated with the object.

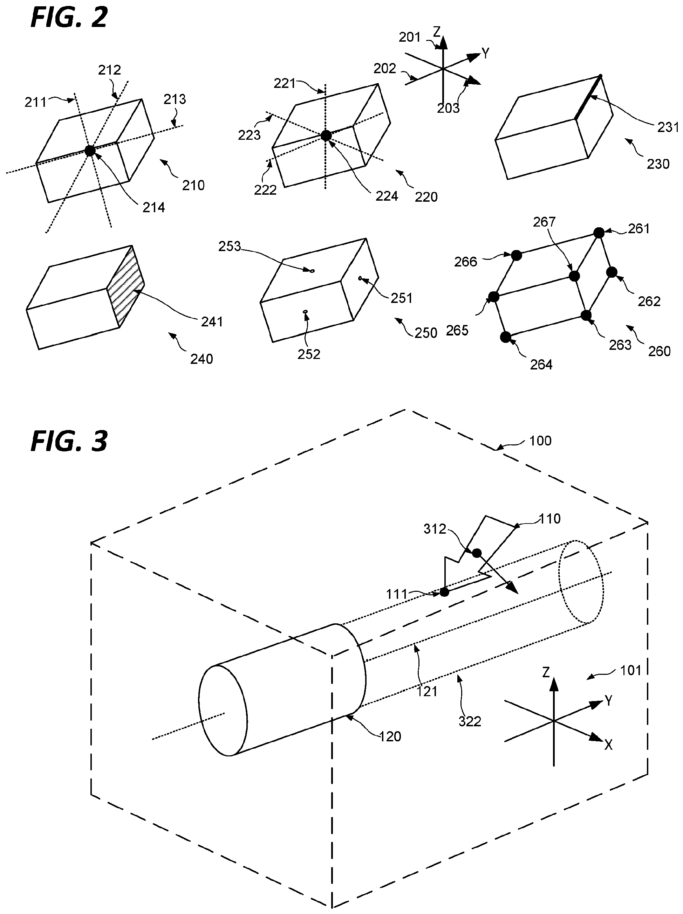

Figure 2 presents a number of possible features of exemplary three dimensional objects in accordance with embodiments.

Figure 2 presents exemplary three dimensional objects, which for the sake of discussion are presented as cuboids. It will be appreciated that notwithstanding this divergence from the form of the mobile object as presented in figure 1, any of these features may be applied mutatis mutandis for the mobile object, or any other object mentioned in the present disclosure.

As shown in figure 2, a first exemplary object 210 may be associated with a feature comprising any of the three axes 211, 212, 213 passing through the barycentre 214 of three-dimensional object 210, and aligned with a longitudinal axis thereof.

Similarly a second exemplary object 220 may be associated with a feature comprising any of the three axes 221, 222, 223 passing through the barycentre 224 of three-dimensional object 220, and aligned with a respective cardinal axis 201, 202, 203 of the virtual space;

Similarly a third exemplary object 230 may be associated with a feature comprising an edge 231 of the three-dimensional object. While a particular edge is highlighted in the present example, it will be appreciated that any edge may be so selected.

Similarly a fourth exemplary object 240 may be associated with a feature comprising a surface 241 of the three-dimensional object. While a particular edge is highlighted in the present example, it will be appreciated that any surface may be so selected.

Similarly a fifth exemplary object 250 may be associated with a feature comprising a centre 251, 252, 253 of a surface of the three-dimensional object 250. While the centres of three particular surfaces are highlighted in the present example (i.e., those that are visible), it will be appreciated that any surface may be so selected.

Similarly a sixth exemplary object 260 may be associated with a feature comprising a vertex 261, 262, 263, 264, 265, 266, 267 or point at an extremity of object 260. While seven particular vertices are highlighted in the present example (i.e., those that are visible), it will be appreciated that any vertex may be so selected.

Still further, the feature may be any geometric feature of an object, or indeed arbitrary vertex, point, axis, edge or surface belonging to the three dimensional object. Such features may be designated by user selected, and or by a default setting for a given object or class of object. Such features may be automatically selected on the basis of other characteristics such as orientation in the three dimensional volume, spatial relationship to the current view point, colour, material, centre of gravity or other characteristic as appropriate to the context.

Resuming discussion of figure 1, similarly, a feature 121 of the three dimensional object 120 is identified.

Specifically, as shown, the selected feature 121 is the longitudinal axis of the cylinder 110, passing through its geometric centre and parallel to its walls.

User input is received defining a movement of the mobile object in the virtual space. As shown, this is represented by a motion vector 112 with respect to the barycentre of the mobile object 110. The movement taken into consideration may be filtered for example to take into account only movement in a given axis, in a straight line, along a defined feature in the virtual space, any arbitrary linear movement, etc. This input may take the form of any convenient user input operation, such as a "drag" operation, or other operation as applicable in the general interface available for manipulations in the virtual space. It will be appreciated that this movement is not necessarily straight. In some embodiments, the intended movement may be assumed to be straight, and the actual input averaged over a defined period to extract an average straight direction of movement. In other embodiments, the actual input may be analysed to determine an intended path which may not be a straight line in the three dimensional space. For example, issues of perspective and other optical distortions may mean that what the user perceives as a straight line may in fact not constitute a straight line in the virtual space, and in embodiments the movement may be corrected to reflect this. Certain movements may be determined to define an arc or other curve in space, for example on the basis of a linear regression or the like, and the movement assessed as being along this curve. In certain embodiments, the determination of the movement may also take into account other objects defined in the virtual space, for example on the assumption that the movement will avoid those objects, etc.

On the basis of the determined movement, a rate of motion of the mobile object is determined. That is to say, it is determined how quickly the mobile object is moving in the virtual space along the determined line. On the basis of this determination, an envelope region 122 is defined, for example as a three dimensional object in the same virtual space, with respect to the three dimensional object in the virtual space, wherein at least one dimension of the envelope region is a function of the rate of motion, in particular is proportional to the rate of motion, and more particularly an inverse relationship, such that the faster the motion, the smaller the envelope. This may have the effect of avoiding situations where the cursor may "catch" on features in an undesired manner, since the snap behaviour will be weak for fast, deliberate movement, but stronger for slow movement. The envelope may itself be defined as a three dimensional entity. The envelope may take the form of a solid of revolution. Where the selected feature is an edge or axis, the envelope may for example take the form of a solid of revolution having a diameter at at least one point defined as a function of the rate of motion. Where the selected feature is a vertex or point, the envelope may for example take the form of a sphere having a diameter proportional to the rate of motion. The function may be linear or not, and may define a threshold above which the envelope region disappears altogether. The dimension of the envelope that varies may depend on the feature in question, as discussed for example with reference to figure 2. In some cases, the form of the envelope will follow the form of the feature itself. For example, a vertex feature may suggest a spherical envelope whose diameter is a function of the rate of motion. A linear feature may suggest a cylindrical envelope whose diameter, and or length is a function of the rate of motion. A surface feature may suggest an envelope comprising a volume defined by a projection of a length proportional to the rate of motion away from the surface radiating in the plane of surface in all directions, and/or radiating out of the plane normal to the surface away from the three dimensional object, and/or radiating into the plane normal to the surface away from the three dimensional object. The scale factor in different directions may vary.

The envelope region may enclose wholly or partially the three dimensional object, and may in particular incorporate the feature 111 of the three-dimensional object. As shown, the envelope 122 comprises a cylinder coaxial with major axis of the cylinder 121, in view of the motion vector 112. The diameter and/or the length of this cylinder may be determined as a function of the speed represented by the motion vector 112.

On the basis of the envelope 122 thus determined, it may be detected that the feature of the mobile object 111 intersects the envelope region 122. As shown in figure 1, it may be noted that the feature of the mobile object 111 does not intersect the envelope region 122. Further operations in accordance with embodiments will now be discussed with respect to figure 3.

By varying the scope of a snap-to feature as described depending on the speed of motion a cursor (for example), and the inferences made as to the user's intentions on this basis, the described mechanisms provide an intuitive approach for provide user input.

Figure 3 presents a further three dimensional environment with respect to which embodiments may be described.

The configuration in the three dimensional environment of figure 3 is identical to that of figure 1, subject to the variations described further below. Corresponding elements retain like reference numbering.

The configuration of figure 3 is identical to that of figure 1, differs from that of figure 1 in particular in that the rate of motion of the mobile object 110 as represented by the motion vector 312 is greater than that shown in figure 1. Accordingly, the diameter of the envelope 322 is correspondingly greater, such that the feature 111 of the mobile object 110 intersects the envelope region 322. In accordance with embodiments, responsive to detecting that the feature 111 of the mobile object 110 intersects the envelope region 322, the mobile object 110 is shifted to align the feature 111 of the mobile object with the feature of the three dimensional object 120 in the virtual space 100. This may cause the entity to jump, ie to be automatically displaced in the environment from its current position to align with the other entity. This shift operation may broadly be referred to as a "snap" behaviour.

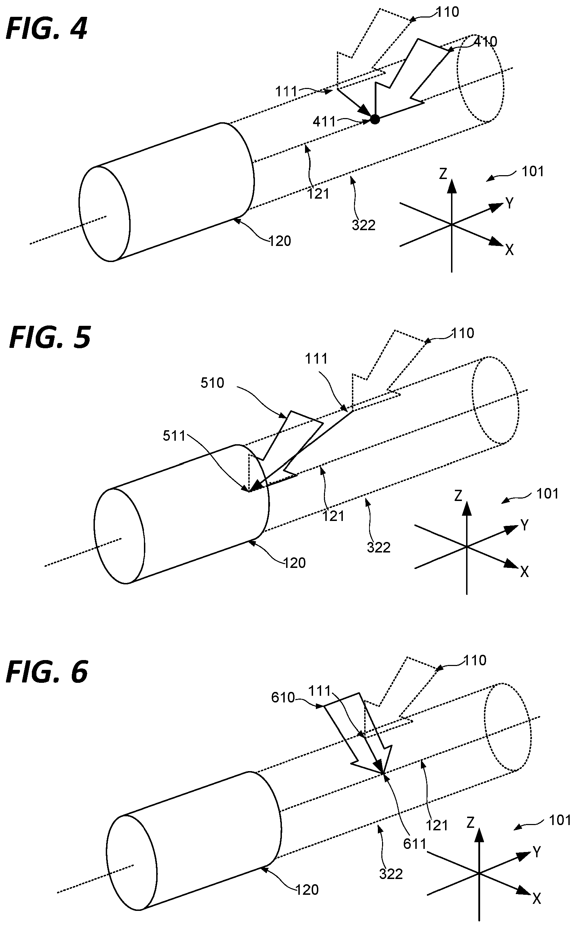

Figure 4 presents a mechanism of realignment in accordance with embodiments.

The configuration in the three dimensional environment of figure 4 is identical to that of figures 1 and 3, subject to the variations described further below. Corresponding elements retain like reference numbering.

As shown in figure 4, in accordance with the mechanisms described above, it has been detected that the feature 111 of the mobile object 110 intersects the envelope region 322, the mobile object 110 is shifted to align the feature 111 of the mobile object with the feature of the three dimensional object in the virtual space. As shown in figure 4, this step of aligning the feature of the mobile object with the three dimensional object in the virtual space comprises bringing the feature 411 (labelled 111 in its original position) of the mobile object 410 (labelled 110 in its original position) to intersect with the feature 121 of the three dimensional object 120 in the virtual space. As shown, the feature of the mobile object is shifted to the nearest point of the feature of the three dimensional object in the virtual space, without changing the orientation of the mobile object in the virtual space.

Figure 5 presents a mechanism of realignment in accordance with embodiments.

The configuration in the three dimensional environment of figure 5 is identical to that of figures 1 and 3, subject to the variations described further below. Corresponding elements retain like reference numbering.

As shown in figure 5, in accordance with the mechanisms described above, it has been detected that the feature 111 of the mobile object 110 intersects the envelope region 322 the three dimensional object 120, and has been shifted to align the feature 111 of the mobile object with the feature of the three dimensional object in the virtual space. As shown in figure 5, this step of aligning the feature of the mobile object with the three dimensional object in the virtual space comprises bringing the feature 511 (labelled 111 in its original position) of the mobile object 510 (labelled 110 in its original position) to intersect with the feature 121 of the three dimensional object in the virtual space. As shown, the feature of the mobile object is shifted to the nearest intersection between the periphery of the three dimensional object and the feature of the three dimensional object in the virtual space without changing the orientation of the mobile object in the virtual space.

Figure 6 presents a mechanism of realignment in accordance with embodiments.

The configuration in the three dimensional environment of figure 6 is identical to that of figures 1 and 3, subject to the variations described further below. Corresponding elements retain like reference numbering.

As shown in figure 6, in accordance with the mechanisms described above, it has been detected that the feature 111 of the mobile object 110 intersects the envelope region 322 of the three-dimensional object 120, and has been shifted to align the feature 111 of the mobile object with the feature of the three dimensional object in the virtual space. As shown in figure 6, this step of aligning the feature of the mobile object with the three dimensional object in the virtual space comprises bringing the feature 611 (labelled 111 in its original position) of the mobile object 610 (labelled 110 in its original position) to intersect with the feature 121 of the three dimensional object in the virtual space. As shown, the feature of the mobile object is shifted to the nearest point of the feature of the three dimensional object in the virtual space. As such, this approach is similar to that of figure 4. However, in this case, as shown the orientation of the mobile object 110 is reoriented to be normal to the feature 121 of the three dimensional object 120. Other reorientation mechanisms such as reorientation to be parallel to the feature of the three dimensional object, normal to the nearest periphery of the three dimensional object reorientation to align with the motion vector 112, etc. may also be adopted.

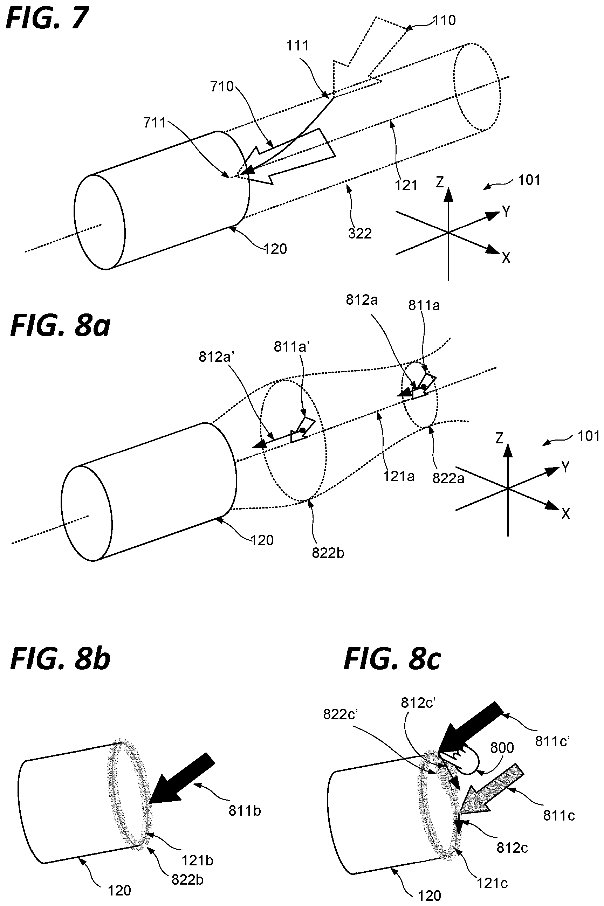

Figure 7 presents a mechanism of realignment in accordance with embodiments.

The configuration in the three dimensional environment of figure 7 is identical to that of figures 1 and 3, subject to the variations described further below. Corresponding elements retain like reference numbering.

As shown in figure 7, in accordance with the mechanisms described above it has been detected that the feature 111 of the mobile object 110 intersects the envelope region 322 of the three dimensional object 120, and has been shifted to align the feature 111 of the mobile object with the feature of the three dimensional object in the virtual space. As shown in figure 7, this step of aligning the feature of the mobile object with the three dimensional object in the virtual space comprises bringing the feature 711 (labelled 111 in its original position) of the mobile object 710 (labelled 110 in its original position) to intersect with the feature 121 of the three dimensional object in the virtual space. As shown, the feature of the mobile object is shifted to the nearest point of the feature of the three dimensional object in the virtual space. As such, this approach is similar to that of figure 4. However, in this case, as shown the orientation of the mobile object 110 is reoriented with the feature of the mobile object 110 to be situated at the nearest intersection between the surface of the three dimensional object 120 and the feature 121, and oriented along the feature 121 of the three dimensional object, or normal to the surface of the three dimensional object at the point of intersection, i.e. such the geometric axes of the two objects are parallel.

These different approaches may be freely combined in alternative configurations. For example the realignment of the feature of the mobile object with the nearest part of the intersection as described with reference to figure 5 may be combined with the reorientation of the mobile object as described with respect to figure 6 or 7.

It will be appreciated that in operation, when a user manipulates a mobile object, a number of other objects may each need to be considered as candidate three dimensional objects, with candidate features (possibly multiple features per object) identified for each of these, and associated respective envelopes defined, and determinations made with respect to possible interactions between the feature of the mobile object and each of these envelopes.

It will be appreciated that in a densely populated virtual space, performing these steps continuously for all candidate features of all candidate three dimensional objects may come to constitute a substantial drain on system resources, which may degrade user experience, for example due to a reduced smoothness in graphical rendering, responsiveness of the user interface, reduced draw depth, and so on. To mitigate these effects, the steps outlined above may take system resources into consideration. Specifically, there may be provided a further step of determining a processing capacity of a platform supporting operations as described above, and/or system load levels associated with supporting these operations and the virtual environment in particular, wherein at the step of defining an envelope region around the three-dimensional object, at least one dimension of the envelope region is defined as a function of the rate of motion as discussed above, and to the processing capacity, so that a larger envelope is defined for more capable systems. On this basis, the number of determinations to be made may be restrained by limiting the reach of the described effect.

In certain further embodiments, the behaviour described above may evolve depending on past operations. In particular, when a snap (for example as described with reference to figures 4 to 7) has already occurred, there may be a presumption that the association established by that operation should be maintained in the presence of a fast movement, but a slow movement should more easily overcome the snap effect.

According to certain embodiments, the method may offer a different behaviour in scenarios where the mobile object has already "snapped" to the feature of the three dimensional object, as compared to the general behaviours described above. Specifically, while as described above the envelope is in an inverse relationship to the speed of motion, with a view to reducing the snap effect as regards broad, bold gestures, in a case where the mobile object has already "snapped" to the feature of the three dimensional object, this logic may be reversed. In particular, on the basis that all other things being equal, the user may come to rely on the snapped relationship to assure that the alignment is maintained while allowing himself rapid, sloppy movements. In such a context, the system may look for a clear, slow, deliberate input from the user to move away from the "snapped" relationship.

Figure 8a presents a first example of modified behaviour in a snapped relationship.

The configuration in the three dimensional environment of figure 8a is identical to that of figures 1 and 3, subject to the variations described further below. Corresponding elements retain like reference numbering.

As shown in figure 8a, the mobile object 811a is already snapped on the feature 121a of the three dimensional object, 120 for example as described with respect to figure 4 or 6. The user input is moving the arrow along the axis 121a at a moderate speed, as indicated by motion vector 812a, and on this basis the envelope 822a has a modest dimension. Meanwhile, at a later point, the user input is moving the arrow along the axis 121a at a high speed, as indicated by motion vector 812a', and on this basis the envelope 822a' has a larger dimension, providing a snap effect over a greater distance. Therefore, the risk of inadvertently unsnapping the mobile object is reduced. As long as the user stays in the envelope, the snap is not disabled. If the user goes out of the envelope, the arrow is not snapped anymore.

Accordingly, the size of the envelope may be adapted on the fly depending on the speed of the pointer moving along the axis.

It will be appreciated that this mechanism may be adapted mutatis mutandis to any type of feature, for example as discussed with respect to figure 2. For example, if the three dimensional object is a cylinder, and the selected feature is a circular edge thereof, movement of the mobile object around this circle may cause the definition of a smaller or larger envelope around this circle, e.g. defining a solid torus having a poloidal radius defined as a function of the rate of movement of the mobile element as discussed above.

Similarly, a surface of a three dimensional object may be defined as a feature. If the surface has a hole, the speed of movement of the mobile element and corresponding definition of the envelope may mean that at low speed the mobile element may unsnap from the three dimensional object when it is dragged over the hole and thus detect other elements that are not related to the initial surface, but at high speed the hole is almost "erased" as the envelope expands on all sides around it, making it smaller, or causing it to vanish altogether as regards the snap operation.

As such, in a snapped scenario, the system may disregard any movement component of user input with respect to the mobile object not corresponding to movement along the axis 121a so long as the user input in question exceeds a speed threshold. If the user input with respect to the mobile object not corresponding to movement along the axis 121a so long as the user input in question fails to exceed the speed threshold, then the input is interpreted as a deliberate deviation from the axis 121a, and the mobile object may be moved arbitrarily in space as described with reference for example to figure 1, until a new association between features is established. Accordingly, the method may comprise a further step of determining whether a direction of the rate of motion of the mobile object follows the feature of the three dimensional object, and in a case where the direction of the rate of motion of the mobile object follows the feature of the three dimensional object, the at least one dimension of the envelope region may be defined as a function of the rate of motion such that the influence of the rate of motion on the at least one dimension of the envelope region is less, that is to say, tends to minimise the size of the envelope, where the direction of the rate of motion of the mobile object does not follow the feature of the three dimensional object.

Figure 8b presents a second example of modified behaviour in a snapped relationship in a first scenario.

As shown in figure 8b, a mobile object 811b is already snapped on the feature 121b of the three dimensional object 120 for example as described with respect to figure 4 or 6. In this example, the feature 121b comprises a circular edge of the cylinder 120. The user input is moving the arrow 811b along the feature 121b at a continuous moderate speed, on this basis the envelope 822b, constituting a toroidal volume around the feature 121b has a modest dimension and a fixed minor axis value.

Figure 8c presents a second example of modified behaviour in a snapped relationship in a second scenario.

As shown in figure 8c, a mobile object 811c is already snapped on the feature 121c of the three dimensional object 120 for example as described with respect to figure 4 or 6. In this example, the feature 121c comprises a circular edge of the cylinder 120, identically to figure 8b. The user input (as provided for example with cursor 800) is moving the arrow 811c along the feature 121c at a moderate speed, as indicated by the motion vector 812c, and on this basis the envelope 822c, constituting a length of a toroidal volume around the feature 121c has a modest secondary radius value.

Meanwhile, at a later point, the user input is moving the arrow 812c' along the axis 121 at a higher speed, as indicated by motion vector 812c', and on this basis the envelope 822c' has a larger dimension (secondary radius value), providing a snap effect over a greater distance. Therefore, the risk of unsnapping the mobile object is reduced. As long as the user stays in the envelope, the snap is not disabled. If the user goes out of the envelope, the arrow is not snapped anymore.

Accordingly, the size of the envelope may be adapted on the fly depending on the speed of the pointer moving along the axis.

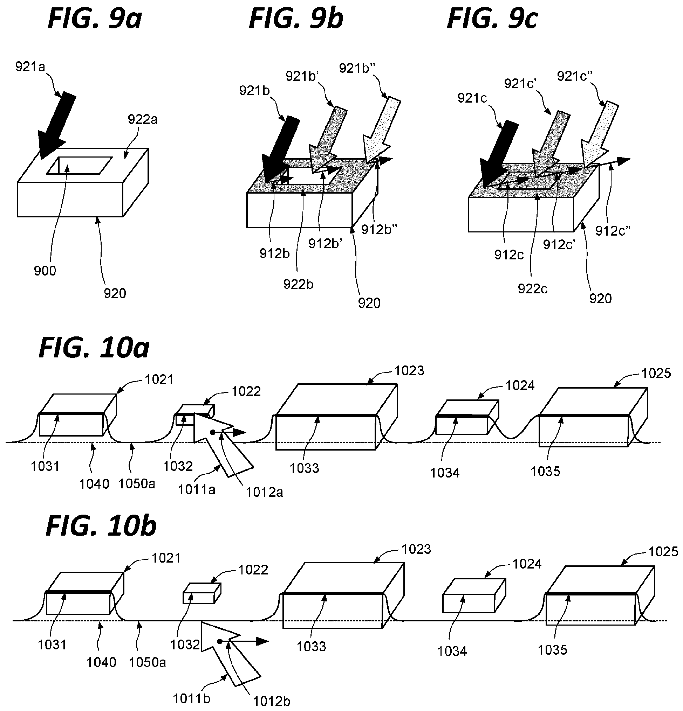

Figure 9a presents a third example of modified behaviour in a snapped relationship.

In this example, object 920 defines a feature 921a as discussed above, which in the present example comprises a surface. Specifically as shown the surface comprises a hole 900 in the surface.

In accordance with conventional behaviours, while an object such as point 921a may be expected to snap to surface 922a, in accordance with the present embodiment, the hole may be disregarded if the user moves fast over it.

When the motion is normal, the user's pointer may go over the hole and thus detect other elements that are not related to the initial surface.

Figure 9b presents a third example of modified behaviour in a snapped relationship in a first scenario.

As shown in figure 9b, the object 920 is moved at a moderate rate across the surface 922b as indicated by motion vector 912b. On this basis, the envelope is defined as not extending significantly beyond the edges of the surface. On this basis, object 920', still moving at a moderate pace as indicated by motion vector 912b', is situated over the hole 900 but is not snapped to the surface 922b, and may be moved away from it freely. Object 920" meanwhile, still moving at a moderate pace as indicated by motion vector 912b", situated once more over the surface 922b, and is once more snapped to the surface 922b.

Figure 9c presents a third example of modified behaviour in a snapped relationship in a second scenario.

As shown in figure 9c, the object 920 is moved at a faster rate across the surface 922c as indicated by motion vector 912c. On this basis, the envelope is defined as extending beyond the edges of the surface, and overlap with the encroaching envelope from the opposite edge of the hole, so that the envelope extents across the full surface as if the hole was not present. On this basis, object 920', still moving a faster pace as indicated by motion vector 912c', is situated over the hole 900 and remains snapped to the surface 922c,. Object 920" meanwhile, still moving a faster pace as indicated by motion vector 912c", situated once more over the surface 922c, and is once more snapped to the surface 922c.

According to certain embodiments, additional factors may be taken into account in determining the envelope dimensions.

### For example:

Pointer size. In certain embodiments, user input may be provided using alternative selection methods. For example, additionally or alternatively to mouse input, a user may provide input using a finger or stylus through a touch-screen interface. In certain embodiments, as the size of the pointer increases (e.g. as the user's finger obscures a greater part of the display), the envelopes are increased to better see what the user snaps on.

### Hardware performances:

We could imagine that as the hardware performances decreases, the envelopes are decreased to avoid launching too much computation.

### The scene cluttering (object off screens, object size, etc.):

We could imagine that as the scene cluttering increases, the envelopes are decreased to avoid catching too many elements.

Figure 10a presents a first scenario of a variable magnetic effect incorporating additional factors.

As shown in figure 10a the user is looking for snapping an arrow on the upper edges 1031, 1032, 1033, 1034, 1035 of a series of three dimensional objects 1021, 1022, 1023, 1024, 1025.

A dotted line 1040 reflects the unmodified path defined by user input through the virtual space, while the unbroken line 1050a represents the path described by the mobile object 1011a as a result of the magnetic effect. As shown in figure 10a, the mobile object 1011a moves at a moderate rate as indicated by motion vector 1012a. In accordance with embodiments described above, an envelope is described with respect to the upper edges 1031, 1032, 1033, 1034, 1035 of a series of the three dimensional objects 1021, 1022, 1023, 1024, 1025 as represented by a bold line, causing the mobile object 1011a to describe a modified path through space 1050a as it snaps to each edge in turn.

Figure 10b presents a second scenario of a variable magnetic effect incorporating additional factors.

The configuration of figure 10b is identical to that of figure 10a, subject to the variations described further below. Corresponding elements retain like reference numbering.

A dotted line 1040 reflects the unmodified path defined by user input through the virtual space, while the unbroken line 1050a represents the path described by the mobile object 1011b as a result of the magnetic effect. As shown in figure 10b, the mobile object 1011b moves at a fast rate as indicated by motion vector 1012b. In accordance with embodiments described above, an envelope is described with respect to the upper edges 1031, 1032, 1033, 1034, 1035 of a series of the three dimensional objects 1021, 1022, 1023, 1024, 1025 as represented by a bold line. In accordance with the present embodiment, a dimension of this envelope is defined as a function of both the speed of the mobile object 1011a, and also of the size of each three dimensional object, so that the envelope of large objects is itself larger. As a result of this effect as shown, with a high speed of the mobile object, the envelope of three dimensional objects 1021, 1023 and 1025 is sufficiently large to exert an effect on the mobile object, but the envelope of three dimensional objects 1022 and 1024 is too small to exert an effect on the mobile object, in view of the scaling of the envelope as a function of the size of each three dimensional object. As such, the movement of the mobile objects describes a modified path through space 1050b as it snaps to the edges of 1021, 1023 and 1025 in turn.

According to certain embodiments, large objects may have a smaller dynamic effect as discussed with respect to figures 1 to 9, on the basis of a presumption that the user will intuitively moderate the speed of his gestures as a function of the size of the object of interest, and the resulting degree of precision required. On this basis, the method may comprise a further step of determining a dimension of the (or each) three dimensional object, wherein at the step of defining an envelope region around the three-dimensional object, the at least one dimension of the envelope region defined as a function of the rate of motion as discussed above, and of the dimension of the three dimensional object so that the larger the object, the smaller the envelope.

It will be appreciated that the approaches described above are freely interchangeable. For example, the definition of the envelope dimensions may be performed on the basis of any combination of system capacity, virtual space complexity, user input speed, three dimensional object dimensions and existing object feature associations, as desired.

For example, depending on the criteria (speed, pointer size, etc.) a formula along the following lines may be envisaged:
R = f (S,F,H,C,O)

Where
R = Scale Ratio, applicable to a default envelope size.
S = Cursor or pointer Speed factor
F = pointer size factor
H = Hardware requirement factor
C = Scene cluttering factor
O = size of three dimensional object
So in the end,
Dynamic magnet zone size = default size x R

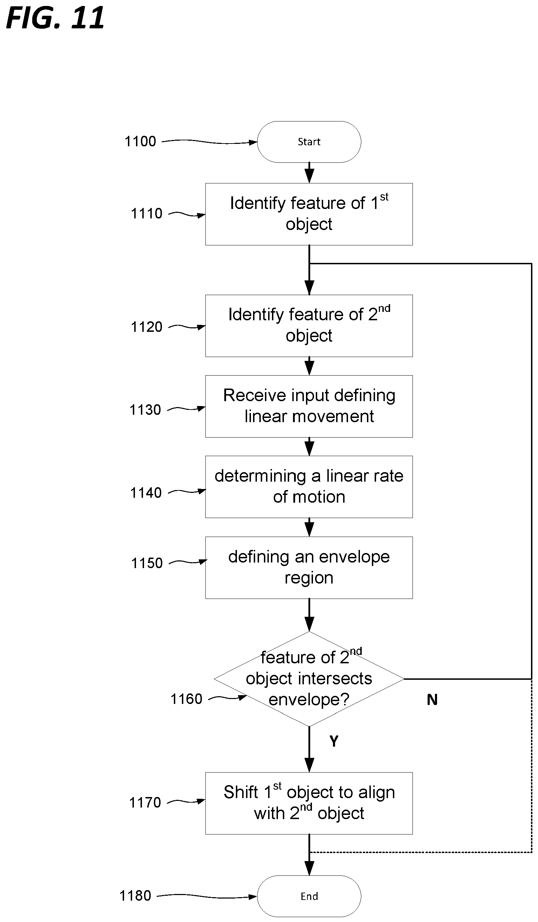

Figure 11 presents steps of a method in accordance with an embodiment.

Figure 11 presents steps of a method of construction of a digital representation of a spatial relationship between a mobile object and a three dimensional object. As shown, the method starts at step 1100 before proceeding to step 1110 at which a mobile object as discussed above is identified. The method then proceeds to step 1120 at which a three dimensional object as discussed above is identified. The method then proceeds to step 1130 at which user input defining a movement of the mobile object in the virtual space is received, on the basis of which a rate of motion of the mobile object may be determined at step 1140, which may then be used at step 1150 to define an envelope region with respect to the three dimensional object in the virtual space, wherein at least one dimension of the envelope region is a function of the rate of motion as discussed above.

At step 1160, the method determines whether the feature of the mobile object intersects the envelope region, and in a case where it is detected that the feature of the mobile object intersects the envelope region, the method proceeds to step 1170 at which the mobile object is shifted to align the feature of the mobile object with the feature of the three dimensional object in the virtual space. As shown, if no intersection is determined at step 1160 the method loops back to step 1120 to consider an alternative feature, possibly with respect to an alternative three dimensional object, or to reconsider as the situation evolves. The method might alternatively loop back to step 1130 to receive new user input defining movement of the mobile object. The method might also loop back to step 1110 in a case where user input suggests the definition of a new mobile object (for example the user selects a new object for editing. The skilled person will appreciate that steps 1110 and 1120 might be performed in alternative sequences, and may be performed in parallel, and indeed that steps 1120 to 1160 may be performed with respect to multiple candidate three dimensional objects and/or multiple features in parallel. The method may also loop back in any of these manners once the mobile object is shifted at step 1170, or may terminate at step 1180.

Accordingly, there is provided a three dimensional user interface feature which defines an spatial envelope with respect to a feature of an three dimensional object in a virtual space, the size of the envelope depending on the speed of motion of an element moved by a user in a virtual space such as a cursor, for example using a conventional "drag" operation or the like. If the envelope is determined to encompass a feature of the mobile element in the space, the mobile element is brought into alignment with the three dimensional element. The size of the envelope may additionally be determined as a function of other factors such as the density of elements in the environment, system processing capacity, the size of the other elements, and the like.

The inventive method can be performed by a suitably-programmed general-purpose computer or computer system, possibly including a computer network, storing a suitable program in non-volatile form on a computer-readable medium such as a hard disk, a solid state disk or a CD-ROM and executing the program using its microprocessor(s) and memory.

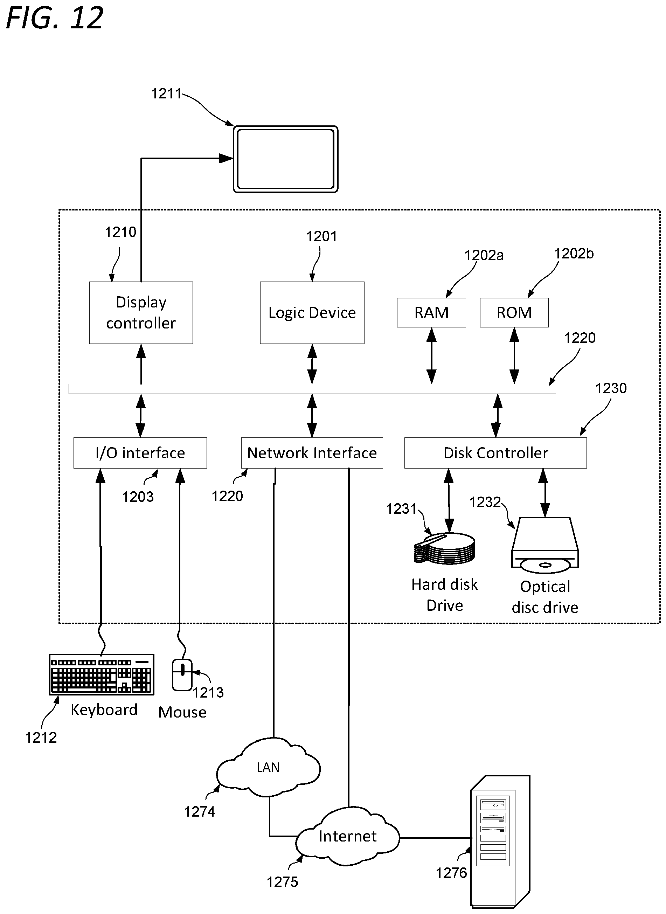

Figure 12 presents a computer suitable for carrying out a method according to an embodiment.

In figure 12, the computer includes a Central Processing Unit (CPU) 1201 which may perform the method steps described above while running an executable program, i.e. a set of computer-readable instructions, stored in a memory device such as RAM 1202a or ROM 1202b or hard disk drive 1231, DVD/CD drive 1232, or stored remotely. Moreover, one or more computer files defining the spatial relations graphs, and computer files comprising the virtual space and objects defined therein, may also be stored on one or more of memory devices 1202a, 1202b, 1231, 1232, or remotely.

The claimed invention is not limited by the form of the computer-readable media on which the computer-readable instructions of the inventive process are stored. For example, the instructions and files can be stored on CDs, DVDs, in FLASH memory, RAM, ROM, PROM, EPROM, EEPROM, hard disk or any other information processing device with which the computer communicates, such as a server or computer. The program can be stored on a same memory device or on different memory devices.

Further, a computer program suitable for carrying out the inventive method can be provided as a utility application, background daemon, or component of an operating system, or combination thereof, executing in conjunction with CPU 1101 and an operating system such as Microsoft XP, Microsoft Windows 10, UNIX, Solaris, LINUX, Apple MAC-OS and other systems known to those skilled in the art.

CPU 1201 can be a Xenon processor from Intel of America or a Ryzen processor from AMD of America, or can be other processor types, such as a Freescale ColdFire, IMX, or ARM processor from NXP Semiconductors. Alternatively, the CPU can be a processor such as a Core from Intel Corporation of America, or can be implemented on an FPGA, ASIC, PLD or using discrete logic circuits, as one of ordinary skill in the art would recognize. Further, the CPU can be implemented as multiple processors cooperatively working to perform the computer-readable instructions of the inventive processes described above.

The computer may include a network interface 1220, such as an Intel Ethernet PRO network interface card from Intel Corporation of America, for interfacing with a network, such as a local area network (LAN) 1274, wide area network (WAN), the Internet 1275 and the like. The method may be implemented remotely, by means of a web application, e.g. operating on remote server 1276.

The computer further includes a display controller 1110, such as a NVIDIA GeForce RTX graphics adaptor from NVIDIA Corporation of America for interfacing with display 1211. A general purpose I/O interface 1203 interfaces with a keyboard 1212 and pointing device 1213, such as a roller ball, mouse, touchpad and the like. The display, the keyboard, the sensitive surface for the touch mode and the pointing device, together with the display controller and the I/O interfaces, form a graphical user interface, used by the user to provide input commands.

Disk controller 1230 connects HDD 1231 and DVD/CD 1232 with communication bus 1220, which can be an ISA, EISA, VESA, PCI, or similar, for interconnecting all of the components of the computer.

A description of the general features and functionality of the display, keyboard, pointing device, as well as the display controller, disk controller, network interface and I/O interface is omitted herein for brevity as these features are known.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The examples described above are given as non-limitative illustrations of embodiments of the invention. They do not in any way limit the scope of the invention which is defined by the following claims.

## Claims

1. A computer implemented method of construction of a digital representation of a spatial relationship between a mobile object (110) and a three dimensional object (120),
said method comprising the steps of:
identifying a geometrical feature (111) of said mobile object,
identifying a geometrical feature (121, 211, 212, 213, 221, 222, 223, 231, 241, 351, 252, 253, 261, 262, 263, 264, 265, 266, 267) of said three dimensional object,
receiving user input defining a movement of said mobile object in a virtual space (100),
determining a rate of motion (112) of said mobile object,
defining an envelope region (122) with respect to said three dimensional object (120) in said virtual space (100), wherein at least one dimension of said envelope region is a function of said rate of motion,
detecting that said geometrical feature (111) of said mobile object intersects said envelope region (122), and
responsive to detecting that said geometrical feature of said mobile object intersects said envelope region (122), shifting said mobile object (110) to align said geometrical feature of said mobile object (110) with said geometrical feature (121, 211, 212, 213, 221, 222, 223, 231, 241, 351, 252, 253, 261, 262, 263, 264, 265, 266, 267) of said three dimensional object in said virtual space (100),
**characterised in that** said envelope region is defined as a further three dimensional object in said virtual space.

2. The method of claim 1 wherein said geometrical feature of said mobile object comprises one of:
• an axis passing through the barycenter of said mobile object, and aligned with a major axis thereof;
• an axis passing through the barycenter of said mobile object, and aligned with a cardinal axis of said virtual space;
• an edge of said mobile object;
• a surface of mobile object;
• a centre of a surface of mobile; and
• a point (111) at an extremity of mobile object.

3. The method of claim 1 or 2 wherein said geometrical feature (121, 211, 212, 213, 221, 222, 223, 231, 241, 351, 252, 253, 261, 262, 263, 264, 265, 266, 267) of said three dimensional object comprises one of:
• an axis (121, 211, 212, 213) passing through the barycenter of said three dimensional object, and aligned with a major axis thereof;
• an axis (221, 222, 223) passing through the barycentre of said three dimensional object, and aligned with a cardinal axis of said virtual space;
• an edge (231) of said three dimensional object;
• a surface (241) of three dimensional object;
• a centre (251, 252, 253) of a surface of said three dimensional object; and
• a point (261, 262, 263, 264, 265, 266, 267) at an extremity of said three dimensional object.

4. The method of any preceding claim wherein said step of aligning said geometrical feature of said mobile object with said three dimensional object in said virtual space comprises bringing said geometrical feature of said mobile object to intersect with said geometrical feature of said three dimensional object in said virtual space.

5. The method of any preceding claim comprising a further step of determining a processing capacity of a said computer implementing said method, wherein at said step of defining an envelope region (122) with respect to said three dimensional object (120), said at least one dimension of said envelope region is defined as proportional function of said rate of motion and of said processing capacity.

6. The method of any preceding claim comprising a further step of determining whether a direction of said rate of motion of said mobile object follows said feature of said three dimensional object, and in a case where said direction of said rate of motion of said mobile object follows said feature of said three dimensional object, at said step of defining an envelope region around said three dimensional object, said at least one dimension of said envelope region is defined as a function of said rate of motion such that the extent to which said at least one dimension of said envelope region depends on said rate of motion is less where said direction of said rate of motion of said mobile object does not follow said feature of said three dimensional object.

7. The method of any preceding claim comprising a further step of determining a dimension of said three-dimensional object (120), wherein at said step of defining an envelope region (122) with respect to said geometrical feature of said three dimensional object, said at least one dimension of said envelope region (122) is defined as a function of said rate of motion and to said dimension of said three-dimensional object.

8. A data processing system comprising means for carrying out the method of any preceding claim.

9. A computer program comprising instructions which, when the program is executed by a computer, cause the computer to carry out the method of any of claims 1 to 7.

10. A computer-readable medium comprising instructions which, when executed by a computer, cause the computer to carry out the method of any of claims 1 to 7.

11. A non-transitory computer-readable data-storage medium containing computer-executable instructions to cause a computer system to carry out a method according to any of claims 1 to 7.

12. A computer system comprising a processor (1201) coupled to a memory (1202a, 1202b), the memory storing computer-executable instructions to cause the computer system to carry out a method according to any of claims 1 to 7.

## Patentansprüche

1. Computerimplementiertes Verfahren zur Konstruktion einer digitalen Darstellung einer räumlichen Beziehung zwischen einem mobilen Objekt (110) und einem dreidimensionalen Objekt (120),
wobei das Verfahren die folgenden Schritte umfasst:
• Identifizieren eines geometrischen Merkmals (111) des mobilen Objekts,
• Identifizieren eines geometrischen Merkmals (121, 211, 212, 213, 221, 222, 223, 231, 241, 351, 252, 253, 261, 262, 263, 264, 265, 266, 267) des dreidimensionalen Objekts,
• Empfangen einer Benutzereingabe, die eine Bewegung des mobilen Objekts in einem virtuellen Raum (100) definiert,
• Bestimmen einer Bewegungsrate (112) des mobilen Objekts,
• Definieren eines Hüllbereichs (122) in Bezug auf das dreidimensionale Objekt (120) in dem virtuellen Raum (100), wobei mindestens eine Dimension des Hüllbereichs eine Funktion der Bewegungsrate ist,
• Erfassen, dass das geometrische Merkmal (111) des mobilen Objekts den Hüllbereich (122) schneidet, und
• als Reaktion auf das Erfassen, dass das geometrische Merkmal des mobilen Objekts den Hüllbereich (122) schneidet, Verschieben des mobilen Objekts (110), um das geometrische Merkmal des mobilen Objekts (110) an dem geometrischen Merkmal (121, 211, 212, 213, 221, 222, 223, 231, 241, 351, 252, 253, 261, 262, 263, 264, 265, 266, 267) des dreidimensionalen Objekts in dem virtuellen Raum (100) auszurichten,
**dadurch gekennzeichnet, dass** der Hüllbereich als ein weiteres dreidimensionales Objekt in dem virtuellen Raum definiert ist.

2. Verfahren nach Anspruch 1, wobei das geometrische Merkmal des mobilen Objekts eines der folgenden umfasst:
• eine Achse, die durch den Schwerpunkt des mobilen Objekts verläuft und an einer Hauptachse desselben ausgerichtet ist;
• eine Achse, die durch den Schwerpunkt des mobilen Objekts verläuft und an einer Kardinalachse des virtuellen Raums ausgerichtet ist;
• eine Kante des mobilen Objekts;
• eine Oberfläche des mobilen Objekts;
• einen Mittelpunkt einer Oberfläche des mobilen Objekts; und
• einen Punkt (111) an einem äußeren Ende des mobilen Objekts.

3. Verfahren nach Anspruch 1 oder 2, wobei das geometrische Merkmal (121, 211, 212, 213, 221, 222, 223, 231, 241, 351, 252, 253, 261, 262, 263, 264, 265, 266, 267) des dreidimensionalen Objekts eines der folgenden umfasst:
• eine Achse (121, 211, 212, 213), die durch den Schwerpunkt des dreidimensionalen Objekts verläuft und an einer Hauptachse desselben ausgerichtet ist;
• eine Achse (221, 222, 223), die durch den Schwerpunkt des dreidimensionalen Objekts verläuft und an einer Kardinalachse des virtuellen Raums ausgerichtet ist;
• eine Kante (231) des dreidimensionalen Objekts;
• eine Oberfläche (241) des dreidimensionalen Objekts;
• einen Mittelpunkt (251, 252, 253) einer Oberfläche des dreidimensionalen Objekts; und
• einen Punkt (261, 262, 263, 264, 265, 266, 267) an einem äußeren Ende des dreidimensionalen Objekts.

4. Verfahren nach einem der vorhergehenden Ansprüche, wobei der Schritt des Ausrichtens des geometrischen Merkmals des mobilen Objekts an dem dreidimensionalen Objekt in dem virtuellen Raum das Bringen des geometrischen Merkmals des mobilen Objekts zum Schneiden mit dem geometrischen Merkmal des dreidimensionalen Objekts in dem virtuellen Raum umfasst.

5. Verfahren nach einem der vorhergehenden Ansprüche, umfassend einen weiteren Schritt des Bestimmens einer Verarbeitungskapazität eines das Verfahren implementierenden Computers, wobei bei dem Schritt des Definierens eines Hüllbereichs (122) in Bezug auf das dreidimensionale Objekt (120) die mindestens eine Dimension des Hüllbereichs als proportionale Funktion der Bewegungsrate und der Verarbeitungskapazität definiert ist.

6. Verfahren nach einem der vorhergehenden Ansprüche, umfassend einen weiteren Schritt des Bestimmens, ob eine Richtung der Bewegungsrate des mobilen Objekts dem Merkmal des dreidimensionalen Objekts folgt, und falls die Richtung der Bewegungsrate des mobilen Objekts dem Merkmal des dreidimensionalen Objekts folgt, bei dem Schritt des Definierens eines Hüllbereichs um das dreidimensionale Objekt die mindestens eine Dimension des Hüllbereichs als Funktion der Bewegungsrate derart definiert ist, dass das Ausmaß, in dem die mindestens eine Dimension des Hüllbereichs von der Bewegungsrate abhängt, geringer ist, wenn die Richtung der Bewegungsrate des mobilen Objekts dem Merkmal des dreidimensionalen Objekts nicht folgt.

7. Verfahren nach einem der vorhergehenden Ansprüche, umfassend einen weiteren Schritt des Bestimmens einer Dimension des dreidimensionalen Objekts (120), wobei bei dem Schritt des Definierens eines Hüllbereichs (122) in Bezug auf das geometrische Merkmal des dreidimensionalen Objekts die mindestens eine Dimension des Hüllbereichs (122) als Funktion der Bewegungsrate und der Dimension des dreidimensionalen Objekts definiert ist.

8. Datenverarbeitungssystem, umfassend Mittel zur Ausführung des Verfahrens nach einem der vorhergehenden Ansprüche.

9. Computerprogramm, umfassend Befehle, die, wenn das Programm durch einen Computer ausgeführt wird, den Computer veranlassen, das Verfahren nach einem der Ansprüche 1 bis 7 auszuführen.

10. Computerlesbares Medium, umfassend Befehle, die bei Ausführung durch einen Computer den Computer veranlassen, das Verfahren nach einem der Ansprüche 1 bis 7 auszuführen.

11. Nichtflüchtiges computerlesbares Datenspeichermedium, das computerausführbare Befehle enthält, um ein Computersystem zu veranlassen, ein Verfahren nach einem der Ansprüche 1 bis 7 auszuführen.

12. Computersystem, umfassend einen Prozessor (1201), der mit einem Speicher (1202a, 1202b) gekoppelt ist, wobei der Speicher computerausführbare Befehle speichert, um das Computersystem zu veranlassen, ein Verfahren nach einem der Ansprüche 1 bis 7 auszuführen.
**Glossary**
computer implemented method
computerimplementiertes Verfahren
digital representation
digitale Darstellung
spatial relationship
räumliche Beziehung
mobile object
mobiles Objekt
three dimensional object
dreidimensionales Objekt
geometrical feature
geometrisches Merkmal
virtual space
virtueller Raum
rate of motion
Bewegungsrate
envelope region
Hüllbereich
barycenter
Schwerpunkt
major axis
Hauptachse
cardinal axis
Kardinalachse
edge
Kante
surface
Oberfläche
processing capacity
Verarbeitungskapazität
non-transitory computer-readable data-storage medium
nichtflüchtiges computerlesbares Datenspeichermedium

## Revendications

1. Procédé mis en œuvre par ordinateur de construction d'une représentation numérique d'une relation spatiale entre un objet mobile (110) et un objet tridimensionnel (120),
ledit procédé comprenant les étapes consistant à :
• identifier une caractéristique géométrique (111) dudit objet mobile,
• identifier une caractéristique géométrique (121, 211, 212, 213, 221, 222, 223, 231, 241, 351, 252, 253, 261, 262, 263, 264, 265, 266, 267) dudit objet tridimensionnel,
• recevoir une entrée d'utilisateur définissant un déplacement dudit objet mobile dans un espace virtuel (100),
• déterminer une vitesse de déplacement (112) dudit objet mobile,
• définir une région d'enveloppe (122) par rapport audit objet tridimensionnel (120) dans ledit espace virtuel (100), dans lequel au moins une dimension de ladite région d'enveloppe est fonction de ladite vitesse de déplacement,
• détecter que ladite caractéristique géométrique (111) dudit objet mobile coupe ladite région d'enveloppe (122), et
• en réponse à la détection du fait que ladite caractéristique géométrique de l'objet mobile coupe ladite région d'enveloppe (122), décaler ledit objet mobile (110) pour aligner ladite caractéristique géométrique dudit objet mobile (110) avec ladite caractéristique géométrique (121, 211, 212, 213, 221, 222, 223, 231, 241, 351, 252, 253, 261, 262, 263, 264, 265, 266, 267) dudit objet tridimensionnel dans ledit espace virtuel (100),
**caractérisé en ce que** ladite région d'enveloppe est définie comme un autre objet tridimensionnel dans ledit espace virtuel.

2. Procédé selon la revendication 1, dans lequel ladite caractéristique géométrique dudit objet mobile comprend l'un parmi :
• un axe passant par le barycentre dudit objet mobile, et aligné avec un axe principal de celui-ci ;
• un axe passant par le barycentre dudit objet mobile, et aligné avec un axe cardinal dudit espace virtuel ;
• une arête dudit objet mobile ;
• une surface de l'objet mobile ;
• un centre d'une surface de l'objet mobile ; et
• un point (111) au niveau d'une extrémité de l'objet mobile.

3. Procédé selon la revendication 1 ou 2, dans lequel ladite caractéristique géométrique (121, 211, 212, 213, 221, 222, 223, 231, 241, 351, 252, 253, 261, 262, 263, 264, 265, 266, 267) dudit objet tridimensionnel comprend l'un parmi :
• un axe (121, 211, 212, 213) passant par le barycentre dudit objet tridimensionnel, et aligné avec un axe principal de celui-ci ;
• un axe (221, 222, 223) passant par le barycentre dudit objet tridimensionnel, et aligné avec un axe cardinal dudit espace virtuel ;
• une arête (231) dudit objet tridimensionnel ;
• une surface (241) de l'objet tridimensionnel ;
• un centre (251, 252, 253) d'une surface dudit objet tridimensionnel ; et
• un point (261, 262, 263, 264, 265, 266, 267) au niveau d'une extrémité dudit objet tridimensionnel.

4. Procédé selon l'une quelconque des revendications précédentes, dans lequel ladite étape consistant à aligner ladite caractéristique géométrique dudit objet mobile avec ledit objet tridimensionnel dans ledit espace virtuel comprend l'étape consistant à amener ladite caractéristique géométrique dudit objet mobile à couper ladite caractéristique géométrique dudit objet tridimensionnel dans ledit espace virtuel.

5. Procédé selon l'une quelconque des revendications précédentes, comprenant une étape supplémentaire consistant à déterminer une capacité de traitement d'un dit ordinateur mettant en œuvre ledit procédé, dans lequel, à ladite étape consistant à définir une région d'enveloppe (122) par rapport audit objet tridimensionnel (120), ladite au moins une dimension de ladite région d'enveloppe est définie comme étant une fonction proportionnelle de ladite vitesse de déplacement et de ladite capacité de traitement.

6. Procédé selon l'une quelconque des revendications précédentes, comprenant une étape supplémentaire consistant à déterminer si une direction de ladite vitesse de déplacement dudit objet mobile suit ladite caractéristique dudit objet tridimensionnel, et dans un cas où ladite direction de ladite vitesse de déplacement dudit objet mobile suit ladite caractéristique dudit objet tridimensionnel, à ladite étape consistant à définir une région d'enveloppe autour dudit objet tridimensionnel, ladite au moins une dimension de ladite région d'enveloppe est définie comme fonction de ladite vitesse de déplacement de telle sorte que la mesure dans laquelle ladite au moins une dimension de ladite région d'enveloppe dépend de ladite vitesse de déplacement est moindre lorsque ladite direction de ladite vitesse de déplacement dudit objet mobile ne suit pas ladite caractéristique dudit objet tridimensionnel.

7. Procédé selon l'une quelconque des revendications précédentes, comprenant une étape supplémentaire consistant à déterminer une dimension dudit objet tridimensionnel (120), dans lequel, à ladite étape consistant à définir une région d'enveloppe (122) par rapport à ladite caractéristique géométrique dudit objet tridimensionnel, ladite au moins une dimension de ladite région d'enveloppe (122) est définie comme étant fonction de ladite vitesse de déplacement et de ladite dimension dudit objet tridimensionnel.

8. Système de traitement de données comprenant des moyens pour mettre en œuvre le procédé selon l'une quelconque des revendications précédentes.

9. Programme d'ordinateur comprenant des instructions qui, lorsque le programme est exécuté par un ordinateur, amènent l'ordinateur à mettre en œuvre le procédé selon l'une quelconque des revendications 1 à 7.

10. Support lisible par ordinateur comprenant des instructions qui, lorsqu'elles sont exécutées par un ordinateur, amènent l'ordinateur à mettre en œuvre le procédé selon l'une quelconque des revendications 1 à 7.

11. Support de stockage de données non transitoire lisible par ordinateur contenant des instructions exécutables par ordinateur pour amener un système informatique à mettre en œuvre un procédé selon l'une quelconque des revendications 1 à 7.

12. Système informatique comprenant un processeur (1201) couplé à une mémoire (1202a, 1202b), la mémoire stockant des instructions exécutables par ordinateur pour amener le système informatique à mettre en œuvre un procédé selon l'une quelconque des revendications 1 à 7.
**Glossary**
computer implemented method
procédé mis en œuvre par ordinateur
digital representation
représentation numérique
spatial relationship
relation spatiale
mobile object
objet mobile
three dimensional object
objet tridimensionnel
geometrical feature
caractéristique géométrique
virtual space
espace virtuel
rate of motion
vitesse de déplacement
envelope region
région d'enveloppe
barycenter
barycentre
major axis
axe principal
cardinal axis
axe cardinal
edge
arête
surface
surface
processing capacity
capacité de traitement
non-transitory computer-readable data-storage medium
support de stockage de données non transitoire lisible par ordinateur
